# EUROPÄISCHE PATENTSCHRIFT

(11) **EP 1 359 334 B1**
(45) Veröffentlichungstag und Bekanntmachung des Hinweises auf die Patenterteilung: **14.06.2006**
(21) Anmeldenummer: 03008208.5
(22) Anmeldetag: 08.04.2003
(51) Int. Cl.: F16C 7/02

(54) **Pleuel für Hubkolbenmaschinen, insbesondere V-Motoren**
Connecting rod for reciprocating piston machine,especially V-type engine
Bielle pour machine à pistons alternatifs,notamment moteurs en V

(30) Priorität: 30.04.2002 DE 10219277
(43) Veröffentlichungstag der Anmeldung: 05.11.2003
(73) Patentinhaber: Bayerische Motoren Werke Aktiengesellschaft, 80809 München (DE)
(72) Erfinder: Kerzendorf, Gerhard, 85551 Kirchheim (DE); Tipkemper, Ulf, Dr., 80801 München (DE); Kunz, Kurz, 73265 Dettingen (DE); Haimerl, Michael, 80638 München (DE)

(56) Entgegenhaltungen:
- EP-A- 0 113 320
- DD-A- 151 792
- DE-A- 10 039 022
- US-A- 2 344 275

## Beschreibung

Die Erfindung bezieht sich auf ein Pleuel für Hubkolbenmaschinen, insbesondere für V-Motoren, bei dem zu einer ein Pleuelauge mittig der Augenbreite querenden Gaskraft-Wirkebene ein aus einem Lagerdeckel und einem Pleuelkopf verschraubtes Pleuel-Hauptlager in Kurbelwellenaxialrichtung versetzt und daher asymmetrisch gestaltet ist, wobei ein breiter und ein schmaler Anlaufbund vorgesehen sind.

Ein derartiges Pleuel ist beispielsweise aus der DE 100 39 022 A1 bekannt, wobei derartige asymmetrische Pleuel vorzugsweise bei Motoren mit zwei Pleuel pro Hubzapfen einer Kurbelwelle eingesetzt sind. Hierbei ist es bei der Gestaltung des Pleuel-Hauptlagers üblich, die Schrauben einer Verschraubung des Lagerdeckels mit dem Pleuelkopf symmetrisch zur tragenden Breite eines in der Bohrung des Pleuel-Hauptlagers angeordneten Gleit- oder Wälzlagers anzuordnen und damit auch asymmetrisch zur Gaskraft-Wirkebene des Pleuels. Die Schwerpunkte der Trennflächen bzw. Spannflächen von Lagerdeckel und Pleuelkopf sind damit asymmetrisch zur tragenden Breite des jeweiligen Lagers.

Der bezogen auf die Gaskraft-Wirkebene einseitige Material-Überstand am Pleuel-Hauptlager führt in den Trennflächen bzw. Spannflächen zu asymmetrischen Schraubenbelastungen sowohl bei der Montage als auch unter den Massenkräften von Pleuel und Kolben. Dies führt in nachteiliger Weise zu einer axialen Verformung des Lagerdeckels und des Pleuels in seinem Oberteil. Hierbei wird die jeweilige Lagerdeckel-Schraube um zwei Achsen gebogen. Neben der Hauptbiegung in der Ebene normal zur Hubzapfenachse erfolgt eine zusätzliche Biegung in Achsrichtung des Hubzapfens. Durch diese zusätzliche Biegung wird das selbstständige Lösen der Schraube unter realen Betriebsbelastungen gefördert.

Die asymmetrische Steifigkeit infolge des Axialversatzes zwischen großem und kleinem Pleuelauge in Verbindung mit der zur Gaskraft-Wirkebene des Pleuels außermittig angeordneten Lagerschale im großen Pleuelauge bedingt ferner eine Kippbewegung des Pleuels bei wechselnder Zug-Druck-Belastung durch umlaufenden Lastangriff im Betrieb mit der Folge, dass an den Anlaufbunden sowie am Kolbenbolzen/Sicherungsring unzulässig hoher Verschleiß auftritt und ein Verdrehen der Lagerschale aufgrund lokalen Klaffens zwischen Lagerschale und Pleuel initiiert wird.

Der Erfindung liegt die Aufgabe zugrunde, die Gestaltung eines asymmetrischen Pleuel-Hauptlagers derart zu verbessern, dass ein Kippen und/oder eine Biegung des Pleuels im Betrieb insbesondere in Achsrichtung eines Kurbelwellen-Hubzapfens vermieden ist.

Die Lösung der Aufgabe erfolgt durch eine belastungsneutrale Ausgestaltung des Pleuels, wobei gemäß dem Patentanspruch 1 die Verschraubungen des Pleuel-Hauptlagers jeweils symmetrisch zur Gaskraft-Wirkebene vorgesehen sind und ein in einer Lagerbohrung dieses Hauptlagers angeordnetes Lagerelement geringfügig außermittig zur Gaskraft-Wirkebene vorgesehen ist.

Von besonderem Vorteil ist es, wenn der schmale Anlaufbund pleuelkopfseitig zumindest im Bereich der Pleuelstangenmitte verstärkt ist und so insbesondere für den Drucklastfall eine belastungsneutrale Struktur erreicht ist, indem ein Ausgleich der verringerten Steifigkeit dieses Anlaufbundes gegenüber dem breiten Anlaufbund erfolgt.

Sehr bevorzugt ist eine entsprechende Ausgestaltung mit deckelseitig verstärktem schmalen Anlaufbund, wodurch insbesondere für den Zuglastfall eine belastungsneutrale Struktur erreicht ist.

Zweckmäßigerweise ist der Übergang vom großen Pleuelauge zur Pleuelstange verstärkt, wodurch eine annähernd symmetrische Beanspruchung der Pleuelstange bis in den Übergangsbereich zwischen Pleuelstange und großem Pleuelauge erreicht ist, die Aufweitung des großen Pleuelauges im Zuglastfall ist reduziert.

Eine alternative Lösung erfolgt mit den Merkmalen des Anspruches 5, wobei gemäß der zugrundeliegenden Idee die Verschraubungen des Pleuel-Hauptlagers jeweils symmetrisch zum großen Pleuelauge vorgesehen sind und ein in einer Lagerbohrung des Hauptlagers angeordnetes Lagerelement geringfügig außermittig zur Gaskraft-Wirkebene vorgesehen ist; mit dieser Lösung erfolgt insbesondere eine Reduzierung der Axialauslenkung.

Eine weitere alternative Lösung der Aufgabe erfolgt mit dem Anspruch 6, und zwar dadurch, dass die Verschraubungen des Pleuel-Hauptlagers sowie ein in einer Lagerbohrung dieses Hauptlagers angeordnetes Lagerelement jeweils symmetrisch zur Gaskraft-Wirkebene vorgesehen sind und dass die über die asymmetrische Gestaltung des Pleuel-Hauptlagers in den von der Verschraubung durchsetzten Spannflächen an Lagerdeckel und Pleuelkopf bewirkten, zur Gaskraft-Wirkebene asymmetrischen Flächenanteile derart reduziert sind, dass die Flächenschwerpunkte der jeweils korrespondierenden Spannflächen in der Gaskraft-Wirkebene liegen.

Mit der erfindungsgemäßen Maßnahme werden in vorteilhafter Weise zur Gaskraft-Wirkebene symmetrisch angeordnete Spannflächen an Lagerdeckel und Pleuelkopf erreicht, womit ungleich große Flächen beiderseits der Gaskraft-Wirkebene in jeder Spannfläche vermieden sind. Aufgrund der nachteilig unterschiedlichen Flächengrößen beiderseits der Gaskraft-Wirkebene ergeben sich beiderseits der Gaskraft-Wirkebene unterschiedliche Pressungen aus der Verschraubung mit unterschiedlicher Ausnutzung der Elastizität des Materials, wobei über die ungleich größere jeweilige Spannflächenhälfte mit geringer beanspruchter Materialelastizität die nachteilige Axialbiegung des Pleuels und der Schrauben der Lagerdeckel-verschraubung bewirkt ist.

Dieser Nachteil ist mit der erfindungsgemäßen Gestaltung der Trenn- bzw. Spannflächen von Lagerdeckel und Pleuelkopf mittels Anordnung der Flächenschwerpunkte in der Gaskraft-Wirkebene überwunden.

Die erfindungsgemäße Flächenreduzierung kann in Ausgestaltung der Erfindung durch eine vorteilhaft einfache Maßnahme dadurch erzielt sein, wenn Lagerdeckel und Pleuelkopf jeweils einen stirnseitigen Anlaufbund aufweisen, der im Übergangsbereich in die jeweilige Spannfläche des Lagerdeckels und des Pleuelkopfes angeschrägt ist entsprechend einer vorbestimmten Flächenreduzierung.

Weiter kann die Belastung der Lagerdeckel-Verschraubung bei einem Lagerdeckel mit außenumfänglich axial beabstandeten Rippen auf einfache Weise dadurch reduziert sein, dass die anlaufbundseitige Rippe der anderen Rippe derart benachbart angeordnet ist, dass der gemeinsame Schwerpunkt der beiden Rippen und des Ringes des Lagerdeckels in der Gaskraft-Wirkebene liegt.

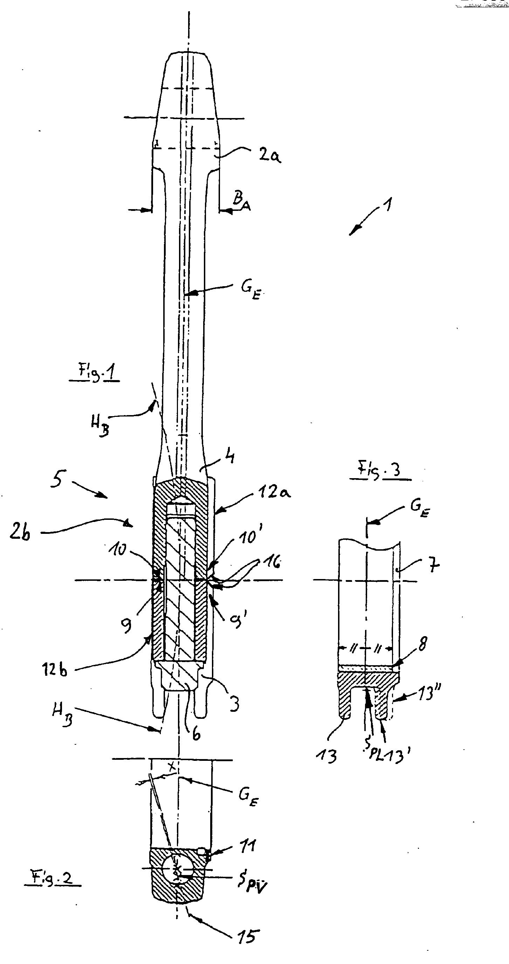

Nachfolgend werden besonders bevorzugte Ausführungsbeispiele der Erfindung unter Bezugnahme auf Figuren näher erläutert, dabei zeigen schematisch und beispielhaft
- Figur 1: ein Pleuel für eine Hubkolbenmaschine mit einem aus einem Lagerdeckel und einem Pleuelkopf verschraubten, asymmetrischen Pleuel-Hauptlager,
- Figur 2: eine Spannfläche des Lagerdeckels in Draufsicht mit asymmetrischem Spannflächenanteil,
- Figur 3: einen asymmetrischen Lagerdeckel im Querschnitt mit einer erfindungsgemäßen Rippenanordnung, die einen gemeinsamen Schwerpunkt in der Gaskraft-Wirkebene des Pleuels bewirkt,
- Figur 4a: ein belastungsneutral ausgestaltetes Pleuel und
- Figur 4b: eine belastungsneutral ausgestaltetes Pleuel im Schnitt.

Ein Pleuel 1 für einen nicht dargestellten V-Motor umfasst ein kleines Pleuelauge 2a mit einer Augenbreite B_{A}, wobei zu einer das Pleuelauge 2a mittig der Augenbreite querenden Gaskraft-Wirkebene G_{E} ein aus einem Lagerdeckel 3 und einem Pleuelkopf 4 verschraubtes Pleuel-Hauptlager 5 asymmetrisch gestaltet ist.

Um bei Betrieb des V-Motors eine Biegung H_{B} des Pleuels 1 in Achsrichtung eines nicht gezeigten Kurbelwellen-Hubzapfens aufgrund der mit der asymmetrischen Gestaltung des Pleuel-Hauptlagers verbundenen unterschiedlichen Materialausnutzung zu vermeiden, sind zum einen die Verschraubungen 6 des Pleuel-Hauptlagers 5 sowie ein in einer Lagerbohrung 7 dieses Hauptlagers 5 angeordnetes Lagerelement 8, z.B. Gleitlager, jeweils symmetrisch zur Gaskraft-Wirkebene G_{E} vorgesehen.

Zum anderen sind die über die asymmetrische Gestaltung des Pleuel-Hauptlagers 5 in den von der Verschraubung 6 durchsetzten Spannflächen 9 und 9' am Lagerdeckel 3 und den Spannflächen 10 und 10' am Pleuelkopf 4 bewirkten, zur Gaskraft-Wirkebene G_{E} asymmetrischen Flächenanteile 11 derart reduziert, dass die Flächenschwerpunkte der jeweils miteinander korrespondierenden Spannflächen 9, 10 und 9', 10' in der Gaskraft-Wirkebene G_{E} liegen.

Die erfindungsgemäße, durch eine Flächenreduktion bewirkte Verlagerung eines Flächenschwerpunktes in die Gaskraft-Wirkebene G_{E} ist bei einem asymmetrischen Pleuel-Hauptlager 5 mit an Lagerdeckel 3 und Pleuelkopf 4 vorgesehenen stirnseitigen Anlaufbund 12a auf einfache Weise dadurch erreicht, dass der im Übergangsbereich in die jeweilige Spannfläche 9, 9' und 10, 10' des Lagerdeckels 3 und des Pleuelkopfes 4 angeschrägt ist entsprechend einer vorbestimmten Flächenreduzierung. Die Anschrägung 16 kann auch bei Bedarf seitlich des Anlaufbundes 12a in die beispielsweise durch Cracken gebildete Spannfläche 9, 9' hinein ausgebildet sein.

Das erfindungsgemäße Prinzip der durch Flächenreduzierung einer in die Gaskraft-Wirkebene G_{E} bewirkten Verlagerung eines Flächenschwerpunktes kann auch in vorteilhafter Weise bei einem Lagerdeckel mit außenumfänglich axial beabstandet angeordneten Rippen 13, 13' gemäß Figur 3 Anwendung finden mit dem Vorteil einer weiteren Verringerung der Belastung der Verschraubung 6 für den Lagerdeckel 3. Der in Figur 3 im Querschnitt dargestellte Lagerdeckel 3 zeigt eine mit gestricheltem Linienzug dargestellte anlaufbundseitige Rippe 13", die erfindungsgemäß der anderen Rippe 13 derart benachbart zugeordnet ist, dass der gemeinsame Schwerpunkt S_{PL} der beiden Rippen 13 und 13' und eines Lagerringes 14 des Lagerdeckels 3 in der Gaskraft-Wirkebene G_{E} liegt. Zu dieser ist, wie aus der Figur 3 ersichtlich, ein als Gleitlagerbuchse gestaltetes Lagerelement 8 symmetrisch angeordnet. Weiter sind zu dieser Gaskraft-Wirkebene G_{E}, wie weiter vorne bereits dargelegt, die Verschraubungen 6 des Lagerdeckels 3 mit dem Pleuelkopf 4 symmetrisch angeordnet.

Mit der vorgenannten erfindungsgemäßen Gestaltung liegen die Verschraubungskräfte sowie die am Lagerelement wirkenden Kräfte symmetrisch zur Gaskraft-Wirkebene G_{E} und dienen somit der Verhinderung einer axialen Biegung H_{B} des Pleuels 1 in Richtung eines nicht gezeigten Kurbelwellen-Hubzapfens. Damit ist die Verschraubung 6 des Lagerdeckels 3 wesentlich entlastet.

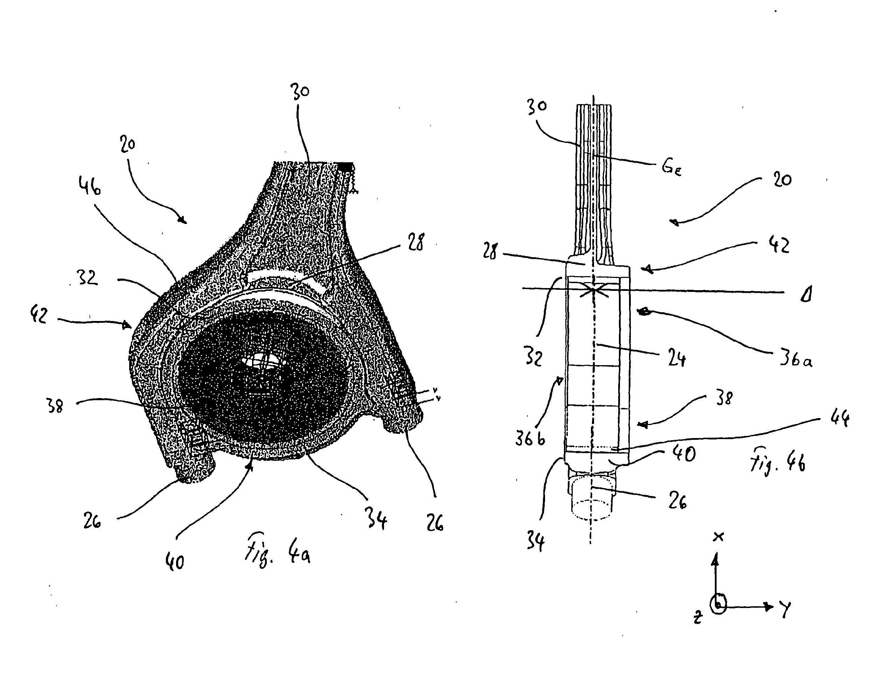

Zu Figur 2 sei noch nachgetragen, dass der Schwerpunkt S_{PR} der erfindungsgemäß flächenreduzierten Spannfläche von Lagerdeckel 3 und Pleuelkopf 4 sich als Schnittpunkt der Flächenträgheitsachse 15 der flächenreduzierten Spannflächen 9, 9' mit der Gaskraft-Wirkebene G_{E} von Verschraubung 6 und tragender Lagerbreite ergibt.

Figur 4a zeigt ein insbesondere in Hinblick auf den Drucklastfall belastungsneutral ausgestaltetes Pleuel 20, welches einen breiten Anlaufbund 36a und einen schmalen Anlaufbund 36b aufweist, eine Schnittdarstellung ist mit Figur 4b gezeigt.

Die Gaskraft-Wirkebene G_{E} liegt zur Pleuelstange 30 symmetrisch, im großen Pleuelauge 38 ist zu dieser mit einem Versatz Δ von 0,01 bis 1 mm, insbesondere von ca. 0,05 bis 0,15, geringfügig außermittig zur Gaskraft-Wirkebene G_{E} eine Lagerschale 44 angeordnet. Der Versatz Δ der Lagerschalenmitte 24 bewirkt bei der im Betrieb durch umlaufenden Lastangriff wechselnden Zug-Druck-Belastung eine um 30 bis 40% reduzierte Axialauslenkung entsprechend einer verringerten Biegung um die Z-Achse.

Eine weitere Reduzierung der Axialauslenkung ist durch die Anordnung der Schrauben 26 zur Befestigung des Pleueldeckes 40 am Pleuelkopf 42 sowie die Schraubenpfeifen mittig zur Pleuelstange 30 und zur Gaskraft-Wirkebene G_{E} symmetrisch erreicht.

Zur Reduzierung der Axialbewegung insbesondere bei einer Zugbelastung des Pleuels 20 ist der schmale Anlaufbund 36b im Bereich 34 des Pleueldeckes 40 einseitig erhöht, eine pleuelkopfseitige Erhöhung des schmalen Anlaufbundes 36b im Bereich 32 reduziert die Axialbewegung insbesondere im Drucklastfall.

Im Bereich 28 ist der Übergang vom großen Pleuelauge 38 zur Pleuelstange 30 verstärkt ausgebildet, so dass insbesondere im Zuglastfall eine Aufweitung des großen Pleuelauges 38 und damit ein Lösen bzw. Verdrehen der Lagerschale 44 vermieden ist.

Insgesamt erfolgt ein Ausgleich der aufgrund der geringeren Breite des Anlaufbundes 36b gegenüber dem Anlaufbund 36a verminderten Steifigkeit durch eine pleuellagerdeckel- und/oder pleueldeckelseitige Verstärkung auf Seite des schmalen Anlaufbundes 36b, durch eine Verstärkung des Übergangsbereiches zwischen großem Pleuelauge 38 und Pleuelstange 30 und/oder weiteren Verstärkungen auf Seite des schmalen Anlaufbundes 36b, wie beispielsweise einer Erhöhung der Wandstärke im Bereich 46. Die Asymmetrie der Anlaufbunde 36a, 36b im Bereich des großen Pleuelauges 38 ist durch materialmäßige Verstärkungen auf Seite des schmalen Anlaufbundes 36b hinsichtlich der Belastung im Betrieb kompensiert.

Die mit den Figuren 4a und 4b gezeigten Maßnahmen können gemeinsam oder einzeln in zweckmäßiger Kombination umgesetzt werden, wobei gegebenenfalls anhängig von weiteren Randbedingungen auch eine nur teilweise belastungsneutrale Ausgestaltung angestrebt ist. Vorliegend wird der Kompensation für den Drucklastfall besondere Bedeutung beigemessen.

## Patentansprüche

1. Pleuel für Hubkolbenmaschinen, insbesondere für V-Motoren,
- bei dem zu einer ein kleines Pleuelauge (2a) mittig der Augenbreite (B_{A}) querenden Gaskraft-Wirkebene (G_{E}) ein aus einem Lagerdeckel (3) und einem Pleuelkopf (4), ein großes Pleuelauge (2b) bildendes, verschraubtes Pleuel-Hauptlager (5) asymmetrisch gestaltet ist, wobei ein breiter Anlaufbund (12a) und ein schmaler Anlaufbund (12b) vorgesehen sind,
**dadurch gekennzeichnet, dass**
- die Verschraubungen (26) des Pleuel-Hauptlagers (38) jeweils symmetrisch zur Gaskraft-Wirkebene (G_{E}) vorgesehen sind und
- ein in einer Lagerbohrung dieses Hauptlagers (38) angeordnetes Lagerelement (44) geringfügig außermittig zur Gaskraft-Wirkebene (G_{E}) vorgesehen ist.

2. Pleuel nach Anspruch 1, **dadurch gekennzeichnet, dass**
der schmale Anlaufbund (12b) pleuelkopfseitig zumindest im Bereich der Pleuelstangenmitte verstärkt ist.

3. Pleuel nach einem der Ansprüche 1 oder 2, **dadurch gekennzeichnet, dass** der schmale Anlaufbund (12b) deckelseitig verstärkt ist.

4. Pleuel nach Anspruch 1 bis 3, **dadurch gekennzeichnet, dass**
der Übergang (28) vom großen Pleuelauge (38) zur Pleuelstange (30) verstärkt ist.

5. Pleuel für Hubkolbenmaschinen, insbesondere für V-Motoren,
- bei dem zu einer ein kleines Pleuelauge (2a) mittig der Augenbreite (B_{A}) querenden Gaskraft-Wirkebene (G_{E}) ein aus einem Lagerdeckel (3) und einem Pleuelkopf (4), ein großes Pleuelauge (2b) bildendes, verschraubtes Pleuel-Hauptlager (5) asymmetrisch gestaltet ist, wobei ein breiter Anlaufbund (12a) und ein schmaler Anlaufbund (12b) vorgesehen sind,
**dadurch gekennzeichnet, dass**
- die Verschraubungen (26) des Pleuel-Hauptlagers (38) jeweils symmetrisch zum großen Pleuelauge (38) vorgesehen sind und
- ein in einer Lagerbohrung des Hauptlagers (38) angeordnetes Lagerelement (44) geringfügig außermittig zur Gaskraft-Wirkebene (G_{E}) vorgesehen ist.

6. Pleuel für Hubkolbenmaschinen, insbesondere für V-Motoren,
- bei dem zu einer ein Pleuelauge (2a) mittig der Augenbreite (B_{A}) querenden Gaskraft-Wirkebene (G_{E}) ein aus einem Lagerdeckel (3) und einem Pleuelkopf (4) verschraubtes Pleuel-Hauptlager (5) asymmetrisch gestaltet ist,
**dadurch gekennzeichnet,**
- **dass** die Verschraubungen (6) des Pleuel-Hauptlagers (5) sowie ein in einer Lagerbohrung (7) dieses Hauptlagers (5) angeordnetes Lagerelement (8) jeweils symmetrisch zur Gaskraft-Wirkebene (G_{E}) vorgesehen sind, und
- **dass** die über die asymetrische Gestaltung des Pleuel-Hauptlagers (5) in den von den Verschraubungen (6) durchsetzten Spannflächen (9, 9'; 10, 10') an Lagerdeckel (3) und Pleuelkopf (4) bewirkten, zur Gaskraft-Wirkebene (G_{E}) asymmetrischen Flächenanteile (11) derart reduziert sind, dass
- die Flächenschwerpunkte der jeweils korrespondierenden Spannflächen (9, 10; 9', 10') in der Gaskraft-Wirkebene (G_{E}) liegen.

7. Pleuel nach Anspruch 6, **dadurch gekennzeichnet,**
- **dass** Lagerdeckel (3) und Pleuelkopf (4) jeweils einen stirnseitigen Anlaufbund (12a) aufweisen, der
- im Übergangbereich in die jeweilige Spannfläche (9, 9'; 10, 10') des Lagerdeckels (3) und des Pleuelkopfes (4) angeschrägt (Schrägen 16) ist entsprechend einer vorbestimmten Flächenreduzierung.

8. Pleuel nach Anspruch 6 und 7, **dadurch gekennzeichnet,**
- **dass** der Lagerdeckel (3) außenumfänglich axial beabstandete Rippen (13, 13') aufweist, wobei
- die anlaufbundseitige Rippe (13') der anderen Rippe (13) derart benachbart angeordnet ist, dass
- der gemeinsame Schwerpunkt der beiden Rippen (13, 13') und eines Lagerringes (14) des Lagerdeckels (3) in der Gaskraft-Wirkebene (G_{E}) liegt.

## Claims

1. A connecting rod for reciprocating engines, especially for V-engines,
- wherein a connecting-rod bearing (5) screwed together from a bearing cover (3) and a connecting-rod top (4) and forming a large connecting-rod eye (2b) is asymmetrically shaped relative to a gas-force operative plane (G_{E}) extending transversely through a small connecting-rod eye (2a) at the centre of the eye width (B_{A}), wherein a wide stop collar (12a) and a narrow stop collar (12b) are provided,
**characterised in that**
- the screws (26) of the connecting-rod bearing (38) are disposed symmetrically relative to the gas-force operative plane (G_{E}) and
- a bearing element (44) disposed in a bore in the main bearing (38) is disposed slightly eccentrically relative to the gas-force operative plane (G_{E}).

2. A connecting rod according to claim 1, **characterised in that** the narrow stop collar (12b) is reinforced on the connecting-rod top side, at least near the centre of the connecting rod.

3. A connecting rod according to claim 1 or 2, **characterised in that** the narrow stop collar (12b) is reinforced on the cover side.

4. A connecting rod according to claims 1 to 3, **characterised in that** the transition (28) from the large connecting-rod eye (38) to the connecting rod (30) is reinforced.

5. A connecting rod for reciprocating engines, especially for V-engines,
- wherein a connecting-rod bearing (5) screwed together from a bearing cover (3) and a connecting-rod top (4) and forming a large connecting-rod eye (2b) is asymmetrically shaped relative to a gas-force operative plane (G_{E}) extending transversely through a small connecting-rod eye (2a) at the centre of the eye width (B_{A}), wherein a wide stop collar (12a) and a narrow stop collar (12b) are provided,
**characterised in that**
- the screws (26) for the connecting-rod bearing (38) are disposed symmetrically relative to the large connecting-rod eye (38) and
- a bearing element (44) disposed in a bore in the main bearing (38) is disposed slightly eccentrically relative to the gas-force operative plane (G_{E}).

6. A connecting rod for reciprocating engines, especially V-engines,
- wherein a connecting-rod bearing (5) screwed together from a bearing cover (3) and a connecting-rod top (4) is asymmetrically shaped relative to a gas-force operative plane (G_{E}) extending transversely through a connecting-rod eye (2a) at the centre of the eye width (B_{A})
**characterised in that**
- the screws (6) of the connecting-rod bearing (5) and a bearing element (8) disposed in a bore (7) in the main bearing (5) are disposed symmetrically relative to the gas-force operative plane (G_{E}) and
- the asymmetrical surface portions (11) relative to the gas-force operative plane (G_{E}) on the bearing cover (3) and connecting-rod top (4) resulting from the asymmetrical shape of the connecting-rod bearing (5) on the clamping surfaces (9, 9', 10, 10') through which the screws (6) extend are so reduced that
- the centres of gravity of the corresponding clamping surfaces (9, 10; 9', 10') lie in the gas-force operative plane (G_{E}).

7. A connecting rod according to claim 6, **characterised in that**
- the bearing cover (3) and the connecting-rod top (4) each have an end-face stop collar (12a), which
- is chamfered (bevels 16) in the transition region in the respective clamping surfaces (9, 9'; 10, 10') of the bearing cover (3) and the connecting-rod top (4) in accordance with a preset reduction of area.

8. A connecting rod according to claims 6 and 7, **characterised in that**
- the bearing cover (3) has outer peripheral axially-spaced ribs (13, 13'), wherein
- the rib (13') on the stop-collar side is so disposed near the other rib (13) that
- the common centre of gravity of the two ribs (13, 13') and of a ring bearing (14) of the bearing cover (3) lies in the gas-force operative plane (G_{E}).

## Revendications

1. Bielle pour moteur à combustion interne alternatif, notamment pour moteurs en V, dans laquelle un palier principal de bielle (5) assemblé par vissage à partir d'un chapeau de palier (3) et d'une tête de bielle (4), formant un grand pied de bielle (2b), est asymétrique par rapport à un plan d'application de la force des gaz (G_{E}) transversal au petit pied de bielle (2a) au centre de la largeur du pied (B_{A}), un collet de butée large (12a) et un collet de butée étroit (12b) étant prévus,
**caractérisée en ce que**
- les fixations à vis (26) du palier principal de bielle (38) sont symétriques par rapport au plan d'application de la force des gaz (G_{E}) et
- un élément de palier (44) disposé dans un alésage du palier principal (38) est légèrement désaxé par rapport au plan d'application de la force des gaz (G_{E}).

2. Bielle selon la revendication 1,
**caractérisée en ce que**
le collet de butée étroit (12b) est renforcé du côté de la tête de bielle, au moins dans la zone centrale du corps de bielle.

3. Bielle selon l'une des revendications 1 ou 2,
**caractérisée en ce que**
le collet de butée étroit (12b) est renforcé du côté du chapeau.

4. Bielle selon les revendications 1 à 3,
**caractérisée en ce que**
la transition (28) du grand pied de bielle (38) au corps de bielle (30) est renforcée.

5. Bielle pour moteur à combustion interne alternatif, notamment pour moteurs en V, dans laquelle un palier principal de bielle (5) assemblé par vissage à partir d'un chapeau de palier (3) et d'une tête de bielle (4), formant un grand pied de bielle (2b), est asymétrique par rapport à un plan d'application de la force des gaz (G_{E}) croisant un petit pied de bielle (2a) au milieu de la largeur du pied (B_{A}), un collet de butée large (12a) et un collet de butée étroit (12b) étant prévus,
**caractérisée en ce que**
- les fixations à vis (26) du palier principal de bielle (38) sont symétriques par rapport au grand pied de bielle (38), et
- un élément de palier (44) disposé dans un alésage du palier principal (38) est légèrement désaxé par rapport au plan d'application de la force des gaz (G_{E}).

6. Bielle pour moteur à combustion interne alternatif, notamment pour moteurs en V, dans laquelle un palier principal de bielle (5) assemblé par vissage à partir d'un chapeau de palier (3) et d'une tête de bielle (4) est asymétrique par rapport à un plan d'application de la force des gaz (G_{E}) croisant un petit pied de bielle (2a) au centre de la largeur du pied (B_{A}),
**caractérisée en ce que**
- les fixations par vis (6) du palier principal de bielle (5) ainsi qu'un élément de palier (8) disposé dans un alésage (7) du palier principal (5) sont symétriques par rapport au plan d'application de la force des gaz (G_{E}), et
- les fractions de surface (11) asymétriques par rapport au plan d'application de la force des gaz (G_{E}) qui résultent de la configuration asymétrique du palier principal de bielle (5) dans les surfaces de serrage (9, 9', 10, 10') du chapeau de palier (3) et de la tête de bielle (4) traversées par les fixations par vis (6) sont réduites de telle sorte que
- les centres de gravité des surfaces de serrage correspondantes (9, 9', 10, 10') se trouvent dans le plan d'application de la force des gaz (G_{E}).

7. Bielle selon la revendication 6,
**caractérisée en ce que**
- le chapeau de palier (3) et la tête de bielle (4) présentent chacun un collet de butée frontal (12a) qui est biseauté (biseaux 16) selon une réduction de surface prédéfinie dans la région de transition vers la surface de serrage correspondante (9, 9', 10, 10') du chapeau de palier (3) et de la tête de bielle (4).

8. Bielle selon les revendications 6 et 7,
**caractérisée en ce que**
- le chapeau de palier (3) présente des nervures (13, 13') espacées axialement sur la périphérie extérieure,
- la nervure (13') du côté du collet de butée étant disposée à côté de l'autre nervure (13) de telle sorte que
- le centre de gravité commun des deux nervures (13, 13') et de la bague (14) du chapeau de palier (3) se trouve dans le plan d'application de la force des gaz (G_{E}).
